# EUROPEAN PATENT APPLICATION

(11) **EP 1 838 024 A1**
(43) Date of publication of application: **26.09.2007**
(21) Application number: 06005652.0
(22) Date of filing: 20.03.2006
(51) Int. Cl.: H04L 1/00, H04L 1/06

(54) **Method and apparatus for selection of MIMO configuration and coding in a mobile telecommunications system**

(71) Applicant: SIEMENS AKTIENGESELLSCHAFT, 80333 München (DE)
(72) Inventor: Schulz, Egon Dr., 80993 München (DE); Zirwas, Wolfgang, 82194 Gröbenzell (DE)

(57) **Abstract**

This invention relates to a method and an apparatus for optimizing a transmission of information concerning a code used for transmitting signals between at least one base station and at least one user equipment, said at least one base station and said at least one user equipment forming a MIMO configuration, comprising the steps of
- defining for said MIMO configuration a subset of best suited codes out of a set of all codes possible for transmitting signals in said MIMO configuration based on a characteristic of said MIMO configuration;
- based on at least one parameter dependant on said MIMO configuration, selecting a best suited code out of said subset of best suited codes; and
- transmitting said information concerning the said selected best suited code from said at least one base station to said at least one user equipment, wherein a size of an overhead for transmitting said information concerning said selected best suited code is optimized.

## Description

The present invention relates to a method and apparatus with means for coupling linear dispersion codes and MIMO configurations, where at least one base station and at least one user equipment define a MIMO configuration.

In mobile telecommunications systems, messages containing data concerning, e.g., speech, images or video, Short Message Service, Multimedia Messaging Service, or other kind of data, are transmitted between at least one base station and at least one user equipment by using electromagnetic waves. The data are coded into symbols using a code, i.e. a rule for converting a piece of information into another form or representation. A large number of codes exist in the context of coding information in a telecommunications systems, amongst them linear dispersion codes, abbr. LDCs.

Linear dispersion codes are used to spread data symbols across space and time. LDCs constitute a whole family of codes that go between the extreme cases of pure spatial multiplexing and pure diversity modes. It is known that full diversity and multiplexing gain is not possible simultaneously with LDCs. Nevertheless, the use of LDCs allows a flexible rate-diversity tradeoff.

This invention is used in Multiple input multiple output, abbr. MIMO, telecommunications systems, i.e. multiple antenna telecommunications systems that have become more and more important in recent years as they allow for increased channel capacity, higher reliability, and better range of these systems compared to single antenna systems. The main advantages of MIMO systems include a diversity gain, characterizing the reliability of system with respect to fading, and a multiplexing gain, characterizing the system's capacity. Still, the above mentioned tradeoff between decreasing the probability of error via the diversity of a used code and increasing system capacity via the spatial multiplexing of a code exists.

It is possible to employ a concept which supports, beside spatial multiplexing, also beamforming, as well as diversity techniques, where a linear dispersion code block allows switching between full diversity to full spatial multiplexing. In this case, a linear pre-coder supports beamforming and can be optimized independently in a first step in case enough channel state information is available.

Generally there might be different reasons to use some degrees of transmit diversity in a MIMO system, like missing channel state information due to very low rate feedback information, e.g. for fast moving user equipments, abbr. UEs, robust as well as low latency data transmission or e.g. low signal-to-interference-and-noise-ratio, abbr. SNIR, at cell edge. Depending on the optimization criteria - i.e. based on ergodic capacity or bit error rate - and scenario generally there is no single best LDC covering all user scenarios. Nevertheless, an adaptation of LDCs to different scenarios is required.

As there will be in the future more than one single antenna configuration at the base station as well as at the UEs, as capabilities of UEs will rise in the future, it is required to have a high number of useful LDCs available where, before transmission, the selected one has to be announced by the base station, based on the feedback information from the UE to the base station. For this purpose, a very robust feedback channel is required. Typically, the overhead for one transmitted protocol bit in UL direction is between 5 and 10 bits and needs strong coding especially for fast moving UEs.

The present invention aims to minimize the overhead for the required selection of the best suited LDCs for a given MIMO configuration.

Said problem is solved by the features mentioned in the independent claims. Preferred embodiments of the invention are described in the dependant claims.

The proposed invention provides the advantage of a reduced protocol overhead for MIMO systems which allow for different antenna configurations using different LDCs per antenna configuration.

An example of the method according to the present invention will now be described.

It is known that for MIMO configurations with at least two transmit antennas and at least two receive antennas there is no single best scheme for all rate and diversity requirements. For a given QoS class - i.e. latency requirement - signal to noise and interference ratio, SNIR, the overhead for the HARQ process, the UE speed etc. the UE evaluates the best suited LDC out of a pre-defined set of codes.

The present invention teaches to couple the possible set of LDCs to the MIMO configuration which is known to the base station. By this, only one out of a small number of suitable LDCs for each MIMO configuration has to be selected, and the selection can thus be signaled efficiently by using only a small capacity of the system from the base station to the user equipment, thereby minimizing the protocol overhead for the overall system. This is possible without performance loss, as each MIMO configuration has its own best suited LDCs with typically only a small number of useful LDCs for a given MIMO configuration.

The best suited feedback channel as well as the according forward channel is typically well known for each MIMO configuration, so it is proposed to tie the feedback channel directly to the decision of the MIMO configuration which avoids extra transmission of protocol elements over the air.

This invention relates to a method for optimizing a transmission of information concerning a code used for transmitting signals between at least one base station and at least one user equipment, said at least one base station and said at least one user equipment forming a MIMO configuration, comprising the steps of
- defining for said MIMO configuration a subset of best suited codes out of a set of all codes possible for transmitting signals in said MIMO configuration based on a characteristic of said MIMO configuration;
- based on at least one parameter dependant on said MIMO configuration, selecting a best suited code out of said subset of best suited codes; and
- transmitting said information concerning the said selected best suited code from said at least one base station to said at least one user equipment, wherein a size of an overhead for transmitting said information concerning said selected best suited code is optimized.

In a specific example of the invention, said code comprises at least one of the following: preemphasis, precoding.

In a specific example of the invention, said MIMO system represents a multi user MIMO system or a cooperative MIMO system. In a cooperative MIMO system, a number of base stations cooperate, forming a distributed multi user MIMO system.

In a specific example of the invention, said at least one parameter dependant on said MIMO configuration comprises at least one channel state information, and wherein said at least one channel state information is transmitted using a feedback channel between said at least one user equipment and said at least one base station. The feedback transmitted over the feedback channel comprises analog or digital values.

In a specific example of the invention, said at least one channel state information comprises at least one of the following values: signal amplitude value, noise value, signal-to-interference-and-noise-ratio.

In a specific example of the invention, said characteristic of said MIMO configuration comprises a number of transmit antennas and a number of receive antennas.

In a specific example of the invention, said code represents a linear dispersion code and said set of all codes possible for transmitting signals in said MIMO configuration represents a set of all linear dispersion codes possible in said MIMO configuration.

In a specific example of the invention, feedback minimization can be achieved by one of the following examples: transmitting a difference between successive channel estimations instead of full channel state information; codebook design, i.e. choosing a best fitting matrix out of a predefined set of matrices; feedback information only for best resource blocks or frequency parts of the whole frequency band; adapting to time variance and / or frequency selectivity.

## Claims

1. A method for optimizing a transmission of information concerning a code used for transmitting signals between at least one base station and at least one user equipment, said at least one base station and said at least one user equipment forming a MIMO configuration, comprising the steps of
• defining for said MIMO configuration a subset of best suited codes out of a set of all codes possible for transmitting signals in said MIMO configuration based on a characteristic of said MIMO configuration;
• based on at least one parameter dependant on said MIMO configuration, selecting a best suited code out of said subset of best suited codes; and
• transmitting said information concerning the said selected best suited code from said at least one base station to said at least one user equipment, wherein a size of an overhead for transmitting said information concerning said selected best suited code is optimized.

2. A method according to claim 1, wherein said code comprises at least one of the following: preemphasis, precoding.

3. A method according to any preceding claim, wherein said MIMO system represents a multi user MIMO system or a cooperative MIMO system.

4. A method according to any preceding claim, wherein said at least one parameter dependant on said MIMO configuration comprises at least one channel state information, and wherein said at least one channel state information is transmitted using a feedback channel between said at least one user equipment and said at least one base station.

5. A method according to any preceding claim, wherein said at least one channel state information comprises at least one of the following values: signal amplitude value, noise value, signal-to-interference-and-noise-ratio.

6. A method according to any preceding claim, wherein said characteristic of said MIMO configuration comprises a number of transmit antennas and a number of receive antennas.

7. A method according to any preceding claim, wherein said code represents a linear dispersion code and said set of all codes possible for transmitting signals in said MIMO configuration represents a set of all linear dispersion codes possible in said MIMO configuration.

8. An apparatus, comprising means for
• optimizing a transmission of information concerning a code used for transmitting signals between at least one base station and at least one user equipment, said at least one base station and said at least one user equipment forming a MIMO configuration;
• defining for said MIMO configuration a subset of best suited codes out of a set of all codes possible for transmitting signals in said MIMO configuration based on a characteristic of said MIMO configuration;
• based on at least one parameter dependant on said MIMO configuration, selecting a best suited code out of said subset of best suited codes; and
• transmitting said information concerning the said selected best suited code from said at least one base station to said at least one user equipment, wherein a size of an overhead for transmitting said information concerning said selected best suited code is optimized.

9. A system, comprising at least one apparatus according to claim 8.
